# EUROPÄISCHE PATENTANMELDUNG

(11) **EP 3 352 345 A1**
(43) Veröffentlichungstag der Anmeldung: **25.07.2018**
(21) Anmeldenummer: 17209200.9
(22) Anmeldetag: 21.12.2017
(51) Int. Cl.: H02K 11/33, H02K 5/22, B60K 1/02, B60K 7/00, H02K 9/19, B60K 1/00, H02K 5/04

(54) **ANTRIEBSSYSTEM**

(30) Priorität: 23.01.2017 DE 102017200979
(71) Anmelder: AUDI AG, 85045 Ingolstadt (DE)
(72) Erfinder: Wegscheider, Roland, 84048 Mainburg (DE)

(57) **Zusammenfassung**

Die Erfindung betrifft ein Antriebsystem (24), das mindestens ein Teilantriebssystem und ein Gehäuse (26) mit mindestens einer Kammer (31, 37) aufweist, wobei das mindestens eine Teilantriebssystem eine Elektromaschine (28, 34) und eine Leistungselektronikeinheit (30, 36) aufweist, wobei die Leistungselektronikeinheit (30, 36) als erstes Modul über mindestens ein Schienensystem in die mindestens eine Kammer (31, 37) als zweites Modul eingeschoben ist, und wobei mindestens ein Kontaktelement der Leistungselektronikeinheit (30, 36) und mindestens ein Kontaktelement (44, 52) der Elektromaschine (28, 34) miteinander verbunden sind.

## Beschreibung

Die Erfindung betrifft ein Antriebssystem für ein Fahrzeug und ein Verfahren zum Montieren eines Antriebssystems.

Eine Leistungselektronikeinheit für eine Elektromaschine wird mit zwei Passhülsen in ihrer Position auf der Elektromaschine fixiert. Hierbei können auch Kühlwasserrohre in die Leistungselektronikeinheit eingepasst werden. Nach einem Fixieren der Leistungselektronikeinheit wird diese bspw. mit vier Schrauben an der Elektromaschine befestigt. Danach werden die drei Phasenanschlüsse der Leistungselektronikeinheit mit Schrauben an Stromschienen der Elektromaschine befestigt. Anschließend wird mit einem Deckel, der eine Dichtfunktion erfüllt, eine Abdichtung zwischen der Elektromaschine und der Leistungselektronikeinheit gewährleistet.

Die voranstehend beschriebenen Montageschritte sind sehr zeitaufwendig und mit vielen Toleranzen behaftet. Auch eine Kontaktierung mit Schrauben an Stromschienen ist toleranzbehaftet. Außerdem müssen Kühlwasseranschlüsse in Handarbeit justiert werden, allerdings können hier geringe Abweichungen eines Toleranzfelds zu Undichtigkeiten zwischen der Leistungselektronikeinheit und der Elektromaschine als Fügepartnern führen.

Die Druckschrift DE 10 2005 026 277 A1 beschreibt ein System zur fahrzeugfesten Halterung eines elektronischen Steuergeräts für Funktionseinrichtungen eines Kraftfahrzeugs in einer fahrzeugfesten Aufnahme, die eine einseitig offene Einschubhülle für das Steuergerät bildet und an einem Boden zumindest eine Durchtrittsöffnung aufweist. Das Steuergerät weist eine in Einschubrichtung frontseitig angeordnete elektrische Steckanordnung auf, die bei dem vollständig in der Einschubhülle eingeschobenem Steuergerät durch die zumindest eine Durchtrittsöffnung mit einer fahrzeugseitig angeordneten korrespondierenden Gegensteckanordnung verbunden ist

Ein Elektromaschinengehäuse ist aus der Druckschrift DE 10 2013 217 890 A1 bekannt. Dieses umfasst zumindest ein erstes Gehäuseteil zur Aufnahme eines Elektromaschinenstators und eines relativ dazu drehbaren Elektromaschinenrotors sowie ein zweites Gehäuseteil zur Aufnahme eines Leistungsmoduls an einem Äußeren des zweiten Gehäuseteils, welches zur elektrischen Bestromung des Elektromaschinenstators oder Elektromaschinenrotors dient. Dabei ist zumindest ein Kühlkanal vorgesehen, der zur Kühlung des Elektromaschinenstators in dem ersten Gehäuseteil und zur Kühlung des Leistungsmoduls in dem zweiten Gehäuseteil verläuft.

Ein Gehäuse für eine Elektromaschine ist aus der Druckschrift DE 10 2010 041 589 A1 bekannt und umfasst ein erstes Gehäuseelement zur Aufnahme einer Leistungselektronikeinheit einer Elektromaschine, ein zweites Gehäuseelement und ein drittes Gehäuseelement, wobei das zweite Gehäuseelement und das dritte Gehäuseelement zur gemeinsamen Aufnahme eines elektrischen Maschinenelementes verbindbar ausgebildet sind.

Vor diesem Hintergrund war es eine Aufgabe, Komponenten eines Antriebssystems derart auszugestalten, dass das Antriebssystem einfach aus ihnen montiert werden kann.

Diese Aufgabe wird mit einem Antriebssystem und einem Verfahren mit den Merkmalen der unabhängigen Patentansprüche gelöst. Ausführungsformen des Antriebssystems und des Verfahrens gehen aus den abhängigen Patentansprüchen und der Beschreibung hervor.

Das erfindungsgemäße Antriebsystem zum Antreiben bzw. Fortbewegen eines Fahrzeugs weist mindestens ein Teilantriebssystem und ein Gehäuse mit mindestens einer Kammer auf, wobei das mindestens eine Teilantriebssystem eine Elektromaschine und eine Leistungselektronikeinheit aufweist. Dabei ist die Leistungselektronikeinheit als erstes Modul über mindestens ein Schienensystem in die mindestens eine Kammer als zweites Modul eingeschoben bzw. einschiebbar. Zusätzlich sind mindestens ein Kontaktelement der Leistungselektronikeinheit und mindestens ein Kontaktelement der Elektromaschine miteinander verbunden bzw. verbindbar.

Das Antriebssystem weist in Ausgestaltung lediglich ein Teilantriebssystem auf, das in diesem Fall je nach Definition dem Antriebssystem entspricht. Falls das Antriebssystem mehrere Teilantriebssysteme aufweist, weist jedes Teilantriebssystem eine Elektromaschine, eine Leistungselektronikeinheit und mindestens eine von dem Gehäuse umschlossene Kammer auf.

Das mindestens eine Schienensystem für die Module kann mindestens eine Schiene aufweisen, die an einer Wand mindestens eines Moduls, d. h. der Kammer und/oder der Leistungselektronikeinheit, angeordnet ist. Demnach kann das mindestens eine Schienensystem lediglich eine Schiene aufweisen, die entweder an der Wand der Kammer oder an der Wand der Leistungselektronikeinheit angeordnet ist.

In Ausgestaltung ist die mindestens eine Schiene des mindestens einen Schienensystems an einer als Innenwand der Kammer ausgebildeten Wand und/oder an einer als Außenwand der Leistungselektronikeinheit ausgebildeten Wand angeordnet. Falls das mindestens eine Schienensystem nur eine Schiene aufweist, ist sie entweder an der Innenwand der Kammer oder an der Außenwand der Leistungselektronikeinheit angeordnet.

In Ausgestaltung weist das mindestens eine Schienensystem für die beiden Module mindestens eine erste Schiene an der Wand, hier üblicherweise der Innenwand, der Kammer und mindestens eine zweite Schiene an der Wand, hier üblicherweise der Außenwand, der Leistungselektronikeinheit auf, die relativ zueinander verschiebbar sind bzw. über die Schienen verschoben werden. Es ist möglich, dass den beiden Modulen mehrere Schienensysteme zugeordnet sind, die entweder eine Schiene oder mehrere Schienen aufweisen. Falls ein Schienensystem zwei Schienen aufweist, ist eine Schiene zu der anderen gegenstückig, bspw. passförmig und/oder invertiert, bspw. als Gegenschiene, ausgebildet. Falls ein Schienensystem nur eine Schiene an der Wand von nur einem der beiden Module aufweist, weist die Wand des anderen der beiden Module ein zu der Schiene passförmig ausgebildetes Gegenstück, bspw. eine Nut auf, innerhalb der die Schiene verschoben wird.

Außerdem ist vorgesehen, dass die Elektromaschine und die Leistungselektronikeinheit des mindestens einen Teilantriebssystems jeweils mindestens ein elektrisches Kontaktelement aufweisen, die miteinander verbindbar und/oder verbunden sind, wobei über diese elektrischen Kontaktelemente und/oder zwischen diesen elektrischen Kontaktelementen zwischen der Elektromaschine und der Leistungselektronikeinheit elektrischer Strom transportierbar ist. Dabei sind die elektrischen Kontaktelemente der Elektromaschine und der Leistungselektronikeinheit in Ausgestaltung zueinander passförmig und/oder gegenstückig, bspw. rotationssysmmetrisch, zumindest teilweise konisch ausgebildet.

In Ausgestaltung weisen die Elektromaschine und die Leistungselektronikeinheit des mindestens einen Teilantriebssystems jeweils mindestens ein thermisches Kontaktelement auf, die miteinander verbunden bzw. verbindbar sind, wobei über diese thermischen Kontaktelemente und/oder zwischen diesen thermischen Kontaktelementen zwischen der Elektromaschine und der Leistungselektronikeinheit ein üblicherweise flüssiges Kühlmittel transportierbar ist. In der Regel weisen die Elektromaschine und die Leistungselektronikeinheit jeweils einen Kühlmittelkreislauf auf, die jeweils mindestens einen Kanal bzw. Kühlmittelkanal für das Kühlmittel aufweisen. Die Kühlmittelkreisläufe bzw. Kühlmittelkanäle sind über die thermischen Kontaktelemente miteinander verbunden bzw. verbindbar. Hierbei ist es ebenfalls möglich, dass die thermischen Kontaktelemente der Elektromaschine und der Leistungselektronikeinheit zueinander passförmig und/oder gegenstückig ausgebildet sind. Dabei kann jeweils ein derartiges thermisches Kontaktelement je nach Definition ein Ende oder einen Anfang eines jeweiligen Kühlmittelkreislaufs bzw. Kühlmittelkanals bilden und/oder umschließen.

In weiterer Ausgestaltung ist es möglich, das jedes Modul mindestens ein Arretierungselement aufweist, wobei beide Module, d. h. die Leistungselektronikeinheit und die Kammer, über die Arretierungselemente miteinander verrastet bzw. verrastbar sind und/oder verrastet werden können.

Dabei sind die Arretierungselemente bspw. an Schienen des mindestens einen Schienensystems angeordnet. Alternativ oder ergänzend ist jeweils ein Arretierungselement mindestens einem der vorgestellten Kontaktelemente, üblicherweise mindestens einem Kontaktelement der Elektromaschine und/oder der Leistungselektronikeinheit, zugeordnet, wobei jeweils ein Kontaktelement zugleich als Arretierungselement ausgebildet sein und/oder ein Arretierungselement aufweisen kann. Somit sind die beiden Module über die zugleich als Arretierungselemente ausgebildeten Kontaktelemente gegenseitig verrastbar. Es ist auch möglich, dass jedes der beiden Module an seiner Wand jeweils ein Arretierungsmodul aufweist, die miteinander verrastbar sind.

Das mindestens eine Teilantriebssystem weist ein Getriebe auf, das einerseits mit der Elektromaschine des mindestens einen Teilantriebssystems mechanisch verbunden bzw. gekoppelt und andererseits mit mindestens einem Rad des Fahrzeugs mechanisch verbunden bzw. gekoppelt ist.

Es ist möglich, dass das Gehäuse neben einer ersten Kammer zur Aufnahme der Leistungselektronikeinheit mindestens eine weitere Kammer zur Aufnahme der mindestens einen Elektromaschine und/oder des mindestens einen Getriebes aufweist.

In Ausgestaltung ist mindestens ein Kontaktelement der Leistungselektronikeinheit kegelförmig oder zumindest kegelstumpfförmig mit einer rotationssymmetrischen, zumindest teilweise oder vollständig konischen Außenwand und mindestens ein dazu korrespondierendes Kontaktelement der Elektromaschine trichterförmig mit einer rotationssymmetrischen zumindest teilweise oder vollständig konischen Innenwand ausgebildet. Alternativ oder ergänzend ist mindestens ein Kontaktelement der Elektromaschine kegelförmig oder zumindest kegelstumpfförmig mit einer zumindest teilweise oder vollständig konischen Außenwand und mindestens ein dazu korrespondierendes Kontaktelement mit einer zumindest teilweise oder vollständig konischen Innenwand der Leistungselektronikeinheit trichterförmig ausgebildet. Somit ist es möglich, ein kegelförmig ausgebildetes Kontaktelement in ein trichterförmig ausgebildetes Kontaktelement einzuschieben. Eine derartige Ausgestaltung ist für ein thermisches sowie für ein elektrisches Kontaktelement möglich.

Das erfindungsgemäße Verfahren ist zum Montieren bzw. zur Montage mindestens eines Teilantriebssystems eines Antriebsystems vorgesehen, das ein Gehäuse mit mindestens einer Kammer aufweist, wobei das mindestens eine Teilantriebssystem eine Elektromaschine und eine Leistungselektronikeinheit aufweist. Beim Montieren wird die Leistungselektronikeinheit als erstes Modul über mindestens ein Schienensystem in die mindestens eine Kammer als zweites Modul eingeschoben. Außerdem werden mindestens ein Kontaktelement der Leistungselektronikeinheit und mindestens ein Kontaktelement der Elektromaschine miteinander verbunden.

Weiterhin werden die beiden Module beim Montieren über die Kontaktelemente, d. h. zwei zueinander passförmig oder gegenstückig ausgebildete elektrische Kontaktelemente und/oder zwei zueinander passförmig oder gegenstückig ausgebildete thermische Kontaktelemente, verbunden.

In Ausgestaltung des Verfahren ist vorgesehen, dass jedes Modul mindestens ein Arretierungselement aufweist, wobei beide Module, d. h. die Leistungselektronikeinheit und die Kammer, beim Montieren über die Arretierungselemente miteinander verrastet werden.

Beim Montieren des mindestens einen Teilantriebssystem wird mindestens ein Kontaktelement der Leistungselektronikeinheit in mindestens ein Kontaktelement der Elektromaschine geschoben. Alternativ oder ergänzend wird mindestens ein Kontaktelement der Elektromaschine in mindestens ein Kontaktelement der Leistungselektronikeinheit geschoben. Dies ist für elektrische und/oder für thermische Kontaktelemente möglich.

Dabei wird ein erstes Kontaktelement, das eine bspw. rotationssymmetrische Außenwand aufweist, in ein zweites, anderes Kontaktelement, das eine zu dem ersten Kontaktelement passförmig und/oder gegenstückig ausgebildete rotationssymmetrische Innenwand aufweist, eingeschoben. Die Außenwand des ersten Kontaktelements ist in Ausgestaltung zumindest teilweise oder vollständig konisch, bspw. kegelförmig oder kugelstumpfförmig, ausgebildet. Entsprechend weist das zweite Kontaktelement, in das das erste Kontaktelement geschoben wird, eine zumindest teilweise oder vollständig konisch ausgebildete Innenwand, bspw. eine trichterförmige Innenwand, auf. Alternativ ist es möglich, dass ein erstes Kontaktelement stiftförmig, mit einer zylinderförmigen Außenwand ausgebildet ist und ein dazu gegenstückiges zweites Kontaktelement eine zylinderförmige Innenwand aufweist.

Falls beide Module jeweils mindestens eine Schiene aufweisen, greifen diese Schienen beim Montieren wechselseitig ineinander, wobei die Module beim Montieren über die Schienen relativ zueinander positioniert werden. Sobald die beiden Module nach einem relativen Verschieben über das mindestens eine Schienensystem eine definierte und/oder vorgesehene Position relativ zueinander eingenommen haben, greifen die Arretierungselemente wechselseitig ineinander, wobei die Module über die Arretierungselemente aneinander automatisch arretiert werden.

Bei einer möglichen Realisierung einer Ausführungsform des Antriebssystems und/oder des Verfahrens wird die Leistungselektronikeinheit über das Schienensystem in das Gehäuse des Antriebssystems eingeschoben und mit der Elektromaschine sowie dem Gehäuse mechanisch verbunden. Außerdem ist in das Antriebssystem eine gegenseitige elektrische sowie thermische Kontaktierung zwischen der Leistungselektronikeinheit und der Elektromaschine über die gegenstückigen, rotationssymmetrischen Kontaktelemente integriert.

Das Antriebssystem ist als Antriebskonzept zum Antreiben eines Fahrzeugs vorgesehen, wobei die Leistungselektronikeinheit neben der Elektromaschine in dieses Antriebssystem integriert ist.

Dabei ist bzw. wird die Leistungselektronikeinheit mit einem Schienensystem in das Antriebssystem, üblicherweise ein Gehäuse des Antriebssystems integriert. Das Schienensystem umfasst in Ausgestaltung zwei Schienen, die zusammenwirken. Dabei sind bzw. werden die Leistungselektronikeinheit und die Elektromaschine über elektrische Kontaktstellen bzw. Schnittstellen miteinander verbunden. Eine Kontaktierung der bspw. als Hochspannungs-Schnittstellen ausgebildeten Schnittstellen erfolgt über sich selbst findende Pins bzw. Kontaktelemente, die zum Leiten von elektrischem Strom ausgebildet sind, in einem Blindverbau. Hierzu wird ein Kontaktelement mit einer rotationssymmetrischen, bspw. zumindest teilweise konischen Außenwand in ein gegenstückiges Kontaktelement mit einer rotationssymmetrischen, bspw. zumindest teilweist konischen Innenwand geschoben. Dies ist sowohl für elektrische als auch thermische Kontaktelemente möglich.

Es ist ebenfalls vorgesehen, dass die Elektromaschine und die Leistungselektronikeinheit über Kühlwasserschnittstellen bzw. thermische Kontaktstellen miteinander kontaktiert sind bzw. werden. Nach einer Arretierung der Leistungselektronikeinheit wird die Leistungselektronikeinheit bspw. über Schrauben im Antriebssystem befestigt.

Mit dem Schienensystem ist über die mindestens eine Schiene bzw. Führungsschiene, die an dem mindestens einen Modul, d. h. der Leistungselektronikeinheit und/oder der Kammer angeordnet ist, zwischen den beiden Modulen ein enger Toleranzbereich realisierbar, wodurch das Antriebssystem stabilisiert wird.

Eine Kontaktierung zwischen der Elektromaschine und der Leistungselektronikeinheit ist über ein voranstehend beschriebenes Trichtersystem möglich, das einerseits das erste Kontaktelement mit der zumindest teilweise konischen Außenwand und andererseits das zweite Kontaktelement mit der zumindest teilweise konischen Innenwand aufweist, wobei das erste Kontaktelement in das zweite Kontaktelement geschoben wird. Die genannten Kontaktelemente können eine vorgesehene Endlage und/oder Kontaktierung selbst finden und sich gegenseitig relativ zueinander ausrichten, was u. a. dann möglich ist, wenn die zu kontaktierenden Kontaktelemente zueinander gegenstückig bzw. passförmig, in der Regel rotationssymmetrisch ausgebildet sind. Hierbei können bei der Montage kleine Toleranzen erreicht werden.

Dabei ist die Leistungselektronikeinheit bspw. in zwei Arbeitsschritten vollständig mit der Elektromaschine kontaktierbar. Im Rahmen des Verfahrens ist es möglich, die Leistungselektronikeinheit und die Elektromaschine über das Schienensystem relativ zueinander zu positionieren bzw. anzuordnen, wobei Toleranzen minimiert werden, die ansonsten bei einem aus dem Stand der Technik bekannten Schraubsystem zum Verbinden einer Leistungselektronikeinheit und einer Elektromaschine auftreten können. Somit kann auf Einzelteile, bspw. Schrauben, verzichtet und eine Komplexität reduziert werden.

Das Antriebssystem umfasst als Komponenten mindestens eine Elektromaschine und mindestens eine Leistungselektronikeinheit, wobei jeweils eine Leistungselektronikeinheit einer Elektromaschine zugeordnet ist. Als weitere Komponente des Antriebssystems ist das Gehäuse vorgesehen, das mindestens eine Kammer umschließt und/oder umfasst bzw. in mehrere Kammern unterteilt ist. Außerdem ist es möglich, dass mindestens ein Getriebe als weitere Komponente des Antriebssystems ausgebildet ist. Dabei ist es möglich, jeweils ein Getriebe und eine Elektromaschine, die bei einem Betrieb des Antriebssystems zusammenwirken, in separaten Kammern des Gehäuses und/oder des Antriebssystems anzuordnen. Ferner ist es möglich, mindestens eine Schiene des Schienensystems in eine bspw. als Innenwand ausgebildete Wand des Gehäuses bzw. einer Kammer zu integrieren. In Ausgestaltung ist diese Wand aus Gussmaterial gebildet, wobei die Schiene des Schienensystems in diesem Fall in das Gussmaterial integriert ist.

Das Schienensystem umfasst eine erste Schiene und eine zweite Schiene, wobei eine der beiden Schienen je nach Definition auch als Gegenschiene zu der anderen Schiene bezeichnet werden und/oder ausgebildet sein kann. Entsprechend kann eine Schiene in eine als Außenwand der Leistungselektronikeinheit ausgebildete Wand integriert sein. Nachdem die Leistungselektronikeinheit in einer für sie vorgesehenen Kammer angeordnet ist, kann die mindestens eine Kammer und somit das Gehäuse mit mindestens einem Deckel verschlossen werden.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung zwei Beispiele für Leistungselektronikeinheiten, die in einem Gehäuse einer ersten Ausführungsform des erfindungsgemäßen Antriebssystems integriert sind.
Figur 2 zeigt in schematischer Darstellung eine zweite Ausführungsform des erfindungsgemäßen Antriebssystems.
Figur 3 zeigt in schematischer Darstellung ein weiteres Beispiel einer Leistungselektronikeinheit, die als Komponente der zweiten Ausführungsform des Antriebssystems aus Figur 2 ausgebildet ist, aus zwei unterschiedlichen Perspektiven.

Die Figuren werden zusammenhängend und übergreifend beschrieben, gleichen Komponenten sind dieselben Bezugsziffern zugeordnet.

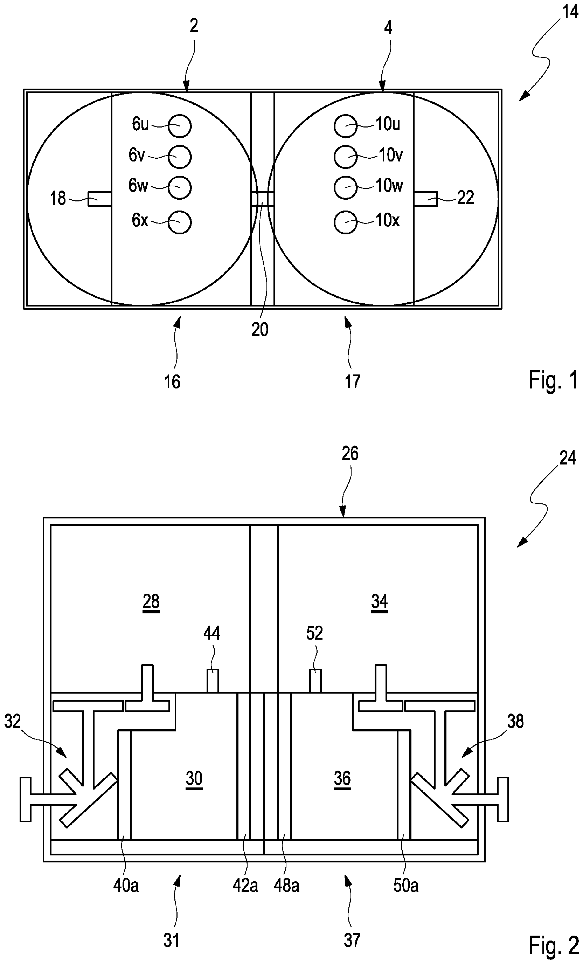

Figur 1 zeigt in schematischer Darstellung das Gehäuse 14 der ersten Ausführungsform des erfindungsgemäßen Antriebssystems, das hier mindestens zwei Kammern 16, 17 aufweist und/oder in diese mindestens zwei Kammern 16, 17 unterteilt ist. Dabei ist in jeweils eine Kammer 16, 17 über jeweils ein Schienensystem ein Beispiel einer Leistungselektronikeinheit 2, 4 eingeschoben.

Dabei umfasst ein erstes Schienensystem eine erste Schiene 18 und eine zweite Schiene 20, die jeweils eine Innenwand der ersten Kammer 16 begrenzen. Außerdem sind an Außenwänden der ersten Leistungselektronikeinheit 2 ebenfalls nicht weiter dargestellte Schienen angeordnet, die in die Schienen 18, 20 an der Innenwand der ersten Kammer 16 greifen. Dabei ist die erste Leistungselektronikeinheit 2 über die Schienen 18, 20 innerhalb der ersten Kammer 16 positioniert. Ein zweites Schienensystem umfasst die zweite Schiene 20 und eine dritte Schiene 22, die jeweils eine Innenwand der zweiten Kammer 17 begrenzen. Außerdem sind an Außenwänden der zweiten Leistungselektronikeinheit 4 ebenfalls nicht weiter dargestellte Schienen angeordnet, die in die Schienen 20, 22 an der Innenwand der zweiten Kammer 17 greifen, wobei die zweite Leistungselektronikeinheit 4 über die Schienen 20, 22 innerhalb der zweiten Kammer 17 positioniert ist.

Die beiden Leistungselektronikeinheiten 2, 4 weisen jeweils vier Kontaktelemente 6u, 6v, 6w, 6x, 10u, 10v, 10w, 10x auf. Dabei sind jeweils drei Kontaktelemente 6u, 6v, 6w, 10u, 10v, 10w als elektrische Kontaktelemente 6u, 6v, 6w, 10u, 10v, 10w ausgebildet, über die die Leistungselektronikeinheiten 2,4 jeweils mit gegenstückig ausgebildeten Kontaktelementen für drei Phasen U, V, W einer Elektromaschine verbindbar sind. Jeweils ein viertes Kontaktelement 6x, 10x einer Leistungselektronikeinheit 2, 4 ist als thermisches Kontaktelement 6x, 10x ausgebildet, über das ein Kanal für ein Kühlmittel, bspw.

Wasser oder Öl, über ein gegenstückig ausgebildetes thermisches Kontaktelement der Elektromaschine mit deren Kanal für das Kühlmittel verbindbar ist.

Die in Figur 2 schematisch dargestellte zweite Ausführungsform des erfindungsgemäßen Antriebssystems 24 umfasst ebenfalls ein Gehäuse 26, in dem mehrere Komponenten des Antriebssystems 24, nämlich eine erste Elektromaschine 28, eine erste Leistungselektronikeinheit 30 und ein erstes Getriebe 32, die ein erstes Teilantriebssystem bilden, sowie eine zweite Elektromaschine 34, eine zweite Leistungselektronikeinheit 36 und ein zweites Getriebe 38, die ein zweites Teilantriebssystem bilden, angeordnet sind.

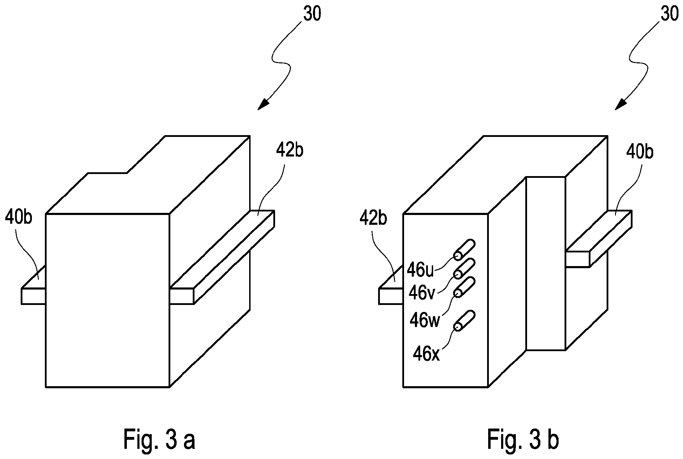

Details zu den beiden Leistungselektronikeinheiten 30, 36 sind hier am Beispiel der ersten Leistungselektronikeinheit 30 in Figur 3a aus der ersten Perspektive von vorne und in Figur 3b aus der zweiten Perspektive von hinten bzw. um 180° gedreht schematisch dargestellt, wobei die zweite Leistungselektronikeinheit 36 genauso wie die erste ausgebildet und entsprechend schematisch darstellbar ist.

Hierbei ist jede der voranstehend genannten Komponenten des Antriebssystems 24 in jeweils einer Kammer 31, 37 innerhalb des Gehäuses 26 angeordnet.

Die erste Leistungselektronikeinheit 30 ist über ein erstes Schienensystem in der für sie vorgesehenen ersten Kammer 31 eingeschoben, wobei Figur 2 diesbezüglich eine erste Schiene 40a und eine zweite Schiene 42a zeigt, die hier an einer Innenwand der ersten Kammer 31 angeordnet sind. Außerdem sind an einer Außenwand der ersten Leistungselektronikeinheit 30 ebenfalls Schienen 40b, 42b des ersten Schienensystems angeordnet, wobei die erste Schiene 40b an der Außenwand der ersten Leistungselektronikeinheit 30 relativ zu der ersten Schiene 40a an der Innenwand der ersten Kammer 31 verschiebbar ist. Die zweite Schiene 42b ist an der Außenwand der ersten Leistungselektronikeinheit 30 an der zweiten Schiene 42a relativ zu der Innenwand der ersten Kammer 31 verschiebbar.

Figur 2 zeigt auch ein Kontaktelement 44 von mehreren Kontaktelementen 44 an einer Außenwand der ersten Elektromaschine 28. An der Außenwand der ersten Leistungselektronikeinheit 30 sind ebenfalls Kontaktelemente 46u, 46v, 46w, 46x angeordnet, die in Figur 3b gezeigt sind. Dabei sind jeweils drei Kontaktelemente 46u, 46v, 46w als elektrische Kontaktelemente 46u, 46v, 46w ausgebildet, über die die erste Leistungselektronikeinheit 30 mit gegenstückig ausgebildeten Kontaktelementen 44 für drei Phasen U, V, W der ersten Elektromaschine 28 verbindbar ist. Jeweils ein viertes Kontaktelement 46x der ersten Leistungselektronikeinheit 30 ist als thermisches Kontaktelement 46x ausgebildet, über das ein Kanal für ein Kühlmittel, bspw. Wasser oder Öl, über ein gegenstückig ausgebildetes thermisches Kontaktelement 44 der ersten Elektromaschine 28 mit deren Kanal für das Kühlmittel verbindbar ist.

Die zweite Leistungselektronikeinheit 36 ist über ein zweites Schienensystem in einer für sie vorgesehenen zweiten Kammer 37 eingeschoben, wobei Figur 2 diesbezüglich eine erste Schiene 48a und eine zweite Schiene 50a zeigt, die hier an einer Innenwand der zweiten Kammer 37 angeordnet sind. Außerdem sind an einer Außenwand der ersten Leistungselektronikeinheit 30 ebenfalls nicht weiter dargestellte Schienen des zweiten Schienensystems angeordnet, wobei die erste Schiene an der Außenwand der zweiten Leistungselektronikeinheit 36 relativ zu der ersten Schiene 48a an der Innenwand der zweiten Kammer 37 verschiebbar ist. Die zweite Schiene an der Außenwand der zweiten Leistungselektronikeinheit 36 ist relativ zu der zweiten Schiene 50a an der Innenwand der zweiten Kammer 37 verschiebbar.

Figur 2 zeigt auch ein Kontaktelement 52 von mehreren Kontaktelementen 52 an einer Außenwand der zweiten Elektromaschine 34. An der Außenwand der zweiten Leistungselektronikeinheit 36 sind ebenfalls nicht weiter dargestellte Kontaktelemente angeordnet. Dabei sind jeweils drei Kontaktelemente als elektrische Kontaktelemente ausgebildet, über die die zweite Leistungselektronikeinheit 36 mit gegenstückig ausgebildeten Kontaktelementen 52 für drei Phasen U, V, W der zweiten Elektromaschine 34 verbindbar sind. Jeweils ein viertes Kontaktelement der zweiten Leistungselektronikeinheit 36 ist als thermisches Kontaktelement ausgebildet, über das ein Kanal für ein Kühlmittel, bspw. Wasser oder Öl, über ein gegenstückig ausgebildetes thermisches Kontaktelement 52 der zweiten Elektromaschine 34 mit deren Kanal für das Kühlmittel verbindbar ist.

Das Antriebssystem 24 ist zum Antreiben eines Fahrzeugs vorgesehen, wobei innerhalb des ersten Teilantriebssystems die erste Elektromaschine 28, die erste Leistungselektronikeinheit 30 und das erste Getriebe 32 zusammenwirken, das wiederum mit mindestens einem Rad des Fahrzeugs verbunden ist. Die erste Elektromaschine 28 kann entweder als Motor oder Generator betrieben werden, wobei die erste Elektromaschine 28 beim Betrieb als Motor elektrische Energie aus einem elektrischen Energiespeicher in mechanische Energie wandelt, die über das erste Getriebe 32 an das mindestens eine Rad übertragen wird. Bei einem Betrieb der ersten Elektromaschine 28 als Generator wird mechanische Energie des mindestens einen Rads über das erste Getriebe 32 zu der ersten Elektromaschine 28 übertragen und von dieser in elektrische Energie umgewandelt und an den elektrischen Energiespeicher übertragen. Entsprechend ist die zweite Elektromaschine 34 über das zweite Getriebe 38 mit mindestens einem Rad des Fahrzeugs verbunden und wie die erste Elektromaschine 28 als Motor oder alternativ als Generator betreibbar.

Die vorgestellten Kontaktelemente 6u, 6v, 6w, 6x, 10u, 10v, 10w, 10x, 44, 46u, 46v, 46w, 46x, 52 sind in Ausgestaltung rotationssymmetrisch ausgebildet, wobei jeweils ein erstes Kontaktelement 6u, 6v, 6w, 6x, 10u, 10v, 10w, 10x, 44, 46u, 46v, 46w, 46x, 52 eine rotationssymmetrische Außenwand und ein zweites hierzu gegenstückig ausgebildetes Kontaktelement 6u, 6v, 6w, 6x, 10u, 10v, 10w, 10x, 44, 46u, 46v, 46w, 46x, 52 eine rotationssymmetrische Innenwand aufweist, wobei das erste Kontaktelement 6u, 6v, 6w, 6x, 10u, 10v, 10w, 10x, 44, 46u, 46v, 46w, 46x, 52 in das zweite Kontaktelement 6u, 6v, 6w, 6x, 10u, 10v, 10w, 10x, 44, 46u, 46v, 46w, 46x, 52 geschoben ist bzw. beim Montieren geschoben wird.

Die in Figur 3b explizit dargestellten Kontaktelemente 46u, 46v, 46w, 46x sind zylinderförmig mit zylinderförmigen Außenwänden ausgebildet. Üblicherweise weist das jeweils erste Kontaktelement 6u, 6v, 6w, 6x, 10u, 10v, 10w, 10x, 44, 46u, 46v, 46w, 46x, 52 eine zumindest teilweise oder vollständig konische Außenwand auf und ist in das jeweils zweite Kontaktelement 6u, 6v, 6w, 6x, 10u, 10v, 10w, 10x, 44, 46u, 46v, 46w, 46x, 52 mit einer zumindest teilweise oder vollständig konischen Innenwand eingeschoben.

## Patentansprüche

1. Antriebsystem, das mindestens ein Teilantriebssystem und ein Gehäuse (14, 26) mit mindestens einer Kammer (16, 17, 31, 37) aufweist, wobei das mindestens eine Teilantriebssystem eine Elektromaschine (28, 34) und eine Leistungselektronikeinheit (2, 4, 30, 36) aufweist, wobei die Leistungselektronikeinheit (2, 4, 30, 36) als erstes Modul über mindestens ein Schienensystem in die mindestens eine Kammer (16, 17, 31, 37) als zweites Modul eingeschoben ist, und wobei mindestens ein Kontaktelement (6u, 6v, 6w, 6x, 10u, 10v, 10w, 10x, 46u, 46v, 46w, 46x) der Leistungselektronikeinheit (2, 4, 30, 36) und mindestens ein Kontaktelement (44, 52) der Elektromaschine (28, 34) miteinander verbunden sind.

2. Antriebssystem nach Anspruch 1, bei der das mindestens eine Schienensystem für die Module mindestens eine Schiene (40a, 40b, 42a, 42b, 48a, 50a) aufweist, die an einer Wand des mindestens einen Moduls angeordnet ist.

3. Antriebssystem nach Anspruch 2, bei dem die mindestens eine Schiene (40a, 40b, 42a, 42b, 48a, 50a) des mindestens einen Schienensystems an einer als Innenwand der Kammer (16, 17,31, 37) ausgebildeten Wand und/oder an einer als Außenwand der Leistungselektronikeinheit (2, 4, 30, 36) ausgebildeten Wand angeordnet ist.

4. Antriebssystem nach Anspruch 2 oder 3, bei dem das mindestens eine Schienensystem mindestens eine erste Schiene (40a, 42a, 48a, 50a) an der Wand der Kammer (16, 17, 31, 37) und mindestens eine zweite Schiene (40b, 42b) an der Wand der Leistungselektronikeinheit (2, 4, 30, 36) aufweist, die relativ zueinander verschiebbar sind.

5. Antriebssystem nach einem der voranstehenden Ansprüche, bei dem die Elektromaschine (28, 34) und die Leistungselektronikeinheit (2, 4, 30, 36) des mindestens einen Teilantriebssystems jeweils mindestens ein elektrisches Kontaktelement (6u, 6v, 6w, 10u, 10v, 10w, 46u, 46v, 46w) aufweisen, die miteinander verbunden sind, wobei über diese elektrischen Kontaktelemente (6u, 6v, 6w, 10u, 10v, 10w, 44, 46u, 46v, 46w, 52) zwischen der Elektromaschine (28, 34) und der Leistungselektronikeinheit (2, 4, 30, 36) elektrischer Strom transportierbar ist.

6. Antriebssystem nach einem der voranstehenden Ansprüche, bei dem die Elektromaschine (28, 34) und die Leistungselektronikeinheit (2, 4, 30, 36) des mindestens einen Teilantriebssystems jeweils mindestens ein thermisches Kontaktelement (6x, 10x, 46x) aufweisen, die miteinander verbunden sind, wobei über diese thermischen Kontaktelemente (6x, 10x, 44, 46x, 52) zwischen der Elektromaschine (28, 34) und der Leistungselektronikeinheit (2, 4, 30, 36) ein Kühlmittel transportierbar ist.

7. Antriebssystem nach einem der voranstehenden Ansprüche, bei dem jedes Modul mindestens ein Arretierungselement aufweist, wobei beide Module über die Arretierungselemente miteinander verrastet sind.

8. Antriebssystem nach Anspruch 7, bei dem die Arretierungselemente an Schienen (40a, 40b, 42a, 42b, 48a, 50a) des mindestens einen Schienensystems angeordnet sind.

9. Antriebssystem nach Anspruch 7 oder 8, bei dem jeweils ein Arretierungselement einem Kontaktelement (6u, 6v, 6w, 10u, 10v, 10w, 44, 46u, 46v, 46w, 52) zugeordnet ist.

10. Antriebssystem nach einem der voranstehenden Ansprüche, bei dem das mindestens eine Teilantriebssystem ein Getriebe (32, 38) aufweist, das mit der Elektromaschine (28, 34) des mindestens einen Teilantriebssystems gekoppelt ist.

11. Antriebssystem nach einem der voranstehenden Ansprüche, bei dem mindestens ein Kontaktelement (6u, 6v, 6w, 6x, 10u, 10v, 10w, 10x, 46u, 46v, 46w, 46x) der Leistungselektronikeinheit (2, 4, 30, 36) kegelförmig und mindestens ein dazu korrespondierendes Kontaktelement (44, 52) der Elektromaschine (28, 34) trichterförmig ausgebildet ist, und/oder bei dem mindestens ein Kontaktelement (44, 52) der Elektromaschine (28, 34) kegelförmig und mindestens ein dazu korrespondierendes Kontaktelement (6u, 6v, 6w, 6x, 10u, 10v, 10w, 10x, 46u, 46v, 46w, 46x) der Leistungselektronikeinheit (2, 4, 30, 36) trichterförmig ausgebildet ist.

12. Verfahren zum Montieren mindestens eines Teilantriebssystems eines Antriebsystems (24), das ein Gehäuse (14, 26) mit mindestens einer Kammer (16, 17, 31, 37) aufweist, wobei das mindestens eine Teilantriebssystem eine Elektromaschine (28, 34) und eine Leistungselektronikeinheit (2, 4, 30, 36) aufweist, wobei die Leistungselektronikeinheit (2, 4, 30, 36) als erstes Modul über mindestens ein Schienensystem in die mindestens eine Kammer (16, 17, 31, 37) als zweites Modul eingeschoben wird, und wobei mindestens ein Kontaktelement (6u, 6v, 6w, 6x, 10u, 10v, 10w, 10x, 46u, 46v, 46w, 46x) der Leistungselektronikeinheit (2, 4, 30, 36) und mindestens ein Kontaktelement (44, 52) der Elektromaschine (28, 34) miteinander verbunden werden.

13. Verfahren nach Anspruch 12, bei dem jedes Modul mindestens ein Arretierungselement aufweist, wobei beide Module beim Montieren über die Arretierungselemente miteinander verrastet werden.

14. Verfahren nach Anspruch 12 oder 13, bei dem mindestens ein Kontaktelement (6u, 6v, 6w, 6x, 10u, 10v, 10w, 10x, 46u, 46v, 46w, 46x) der Leistungselektronikeinheit (2, 4, 30, 36) in mindestens ein Kontaktelement (44, 52) der Elektromaschine (28, 34) geschoben wird, und/oder bei dem mindestens ein Kontaktelement (44, 52) der Elektromaschine (28, 34) in mindestens ein Kontaktelement (6u, 6v, 6w, 6x, 10u, 10v, 10w, 10x, 46u, 46v, 46w, 46x) der Leistungselektronikeinheit (2, 4, 30, 36) geschoben wird.
